# EUROPEAN PATENT APPLICATION

(11) **EP 4 803 991 A1**
(43) Date of publication of application: **09.09.2026**
(21) Application number: 24884768.3
(22) Date of filing: 29.10.2024
(51) Int. Cl.: G06F 3/0481

(54) **METHOD AND APPARATUS FOR DISPLAYING WORK, AND DEVICE AND STORAGE MEDIUM**

(30) Priority: 31.10.2023 CN 202311436126
(71) Applicant: Beijing Zitiao Network Technology Co., Ltd., Beijing 100190 (CN)
(72) Inventor: HOU, Sida, Beijing 100028 (CN); FAN, Yijia, Beijing 100028 (CN)
(74) Representative: Grünecker Patent- und Rechtsanwälte PartG mbB
(86) International application number: PCT/CN2024/128300
(87) International publication number: WO 2025/092766

(57) **Abstract**

The embodiments of the disclosure relates to a method, apparatus, device and storage medium for work displaying. The method includes: obtaining target text content; displaying an editing interface, the editing interface displaying at least one piece of media content generated based on the target text content; and displaying a target work, the target work being created based on the target text content and the target media content in the at least one piece of media content.

## Description

This application claims the benefit of Chinese Patent Application No. 202311436126.9, filed Oct. 31, 2023, entitled "Method, Apparatus, Device and Storage Medium for Work Displaying," the entire content of which is incorporated herein by reference.

### FIELD

Example embodiments of the present disclosure generally relate to the field of computers, and in particular, to methods, apparatuses, devices, and computer-readable storage media for work displaying.

### BACKGROUND

With the development of computer technologies, the internet has become an important platform for people to create works, share the works, and obtain the works. For example, people may browse through the internet image works, video works, music works and the like created by other users.

How to more efficiently help a user edit or create a work has become the focus of attention.

### SUMMARY

In a first aspect of the present disclosure, there is provided a method of work displaying. The method comprises obtaining target text content; displaying an editing interface, the editing interface displays at least one piece of media content generated based on the target text content; and displaying a target work, the target work being created based on the target text content and the target media content in the at least one piece of media content.

In a second aspect of the present disclosure, there is provided an apparatus for work displaying. The apparatus comprises a content obtaining module configured to obtain target text content; a first display module configured to display an editing interface, the editing interface displaying at least one piece of media content generated based on the target text content; and a second display module configured to display a target work, the target work being created based on the target text content and the target media content in the at least one piece of media content.

In a third aspect of the present disclosure, there is provided an electronic device. The electronic device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, there is provided a computer-readable storage. The computer-readable storage medium stores a computer program, and the computer program is executable by the processor to implement the method of the first aspect.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIGS. 2A to 2D illustrate example interfaces in accordance with some embodiments of the present disclosure;
FIGS. 3A to 3D illustrate example interfaces in accordance with some embodiments of the present disclosure;
FIG. 4 shows a flowchart of a process for displaying a work according to some embodiments of the present disclosure;
FIG. 5 shows a block diagram of an apparatus for displaying a work according to some embodiments of the present disclosure; and
FIG. 6 illustrates a block diagram of an electronic device capable of implementing various embodiments of the present disclosure.

### DETAILED DESCRIPTION

It should be understood that, before the technical solutions disclosed in the embodiments of the present disclosure are used, the types of personal information related to the present disclosure, the usage scope, the usage scenario and the like should be notified to the user in an appropriate manner according to the relevant laws and regulations and obtain the authorization of the user.

For example, in response to receiving an active request from a user, a prompt is sent to the user to explicitly prompt the user that the requested operation will need to obtain and use the personal information of the user. Therefore, the user can, based on the prompt, proactively select whether to provide the personal information to software or hardware including the electronic device, an application program, a server or storage medium executing the operation of the technical solution of the present disclosure.

As an optional but non-limiting implementation, in response to receiving the active request of the user, the prompt sent to the user may be sent via, for example, a pop-up window, and the pop-up window may present the prompt in text. In addition, the pop-up window may further carry a selection control for the user to select "agree" or "disagree" to provide the personal information to the electronic device.

It should be understood that the foregoing process of notifying and obtaining a user authorization is merely illustrative, and does not constitute a limitation on implementations of the present disclosure, and other manners of satisfying related laws and regulations may also be applied to implementations of the present disclosure.

The term "in response to", as used here, refers to a state in which a corresponding event occurs or a corresponding condition is satisfied. It shall be understood that a timing of a subsequent action performed in response to the event or the condition is not necessarily strongly associated with the time at which the event occurs or the condition is satisfied. For example, in some cases, the subsequent action may be performed immediately when the event occurs or the condition is satisfied; whereas in other cases, the subsequent action may be performed after a period of time following the occurrence of the event of the satisfaction of the condition.

The term "responsive to" as used herein refers a state in which a corresponding event occurs or a corresponding condition is satisfied. It will be appreciated that a timing of a subsequent action performed in response to the event or the condition is not necessarily strongly correlated with the time at which the event occurs or the condition is satisfied. For example, in some cases, the subsequent action may be performed immediately when the event occurs or the condition is satisfied; whereas in other cases, the subsequent action may be performed after a period of time following the occurrence of the event of the satisfaction of the condition.

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with the same section/subsection and/or any other embodiment described in different sections/subsections.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As mentioned briefly above, people can browse through the internet image works, video works, music works and the like created by other users. For creators, they may expect to create more efficiently works capable of attracting other users.

Some conventional solutions support posting text content input by a user as a textual work. However, this work form is often monotonic and difficult to attract other users from audiovisual aspects. An creator usually needs to spend more time to create a textual work enriched in content or form(also referred to as a text related work).

To this end, embodiments of the present disclosure provide a solution for work displaying. According to various embodiments of the present disclosure, target text content may be obtained. Correspondingly, an editing interface may be displayed, and the editing interface displays at least one piece of media content generated based on the target text content. Further, the target work may be displayed, and the target work is created based on the target text content and the target media content in the at least one piece of media content.

In this way, the embodiments of the present disclosure can provide the user with the media content corresponding to the text content, thereby helping the user to create a text related work richer in the content.

Example embodiments of the present disclosure are described below with reference to the accompanying drawings.

### Example Environment

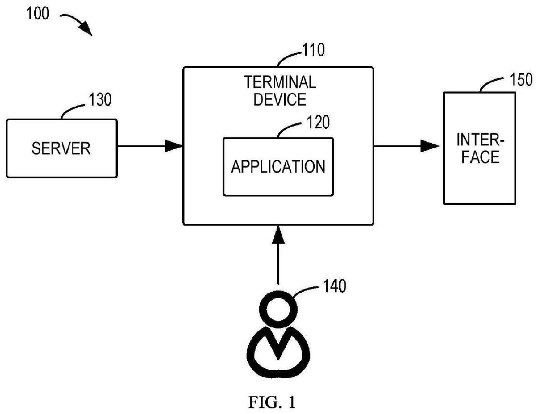

FIG. 1 illustrates a schematic diagram of an example environment 100 in which embodiments of the present disclosure can be implemented. As shown in FIG. 1, the example environment 100 may include a terminal device 110.

In this example environment 100, the terminal device 110 may run an application 120 for providing, viewing, editing or displaying a work. The application 120 may be any suitable type of application for providing services such as viewing the work, editing , sharing, browsing, or downloading, the examples of which may include, but are not limited to, a work sharing application, a work editing application, and the like. The user 140 may interact with the application 120 via the terminal device 110 and/or its attached device.

In the environment 100 of FIG. 1, if the application 120 is in active state, the terminal device 110 may display the interface 150 via the application 120.

In some embodiments, terminal device 110 communicates with server 130 to implement a provision of services to the application 120. The server 150 may provide functions such as management, configuration, and maintenance of applications or websites.

The terminal device 110 may be any type of mobile terminal, a fixed terminal, or a portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a game device, or any combination thereof, including accessories and peripherals of these devices, or any combination thereof. In some embodiments, the terminal device 110 can also support any type of interface for a user (such as a "wearable" circuit, etc. ).

The server 130 may be a standalone physical server, a server cluster composed of multiple physical servers, or a distributed system, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, or the like. The server 130 may provide a background service for the application 120 that supports the virtual scene in the terminal device 110.

A communication connection may be established between the server 130 and the terminal device 110. The communication connection may be established in a wired manner or a wireless manner. The communication connection may include, but is not limited to, a bluetooth connection, a mobile network connection, a universal serial bus (USB) connection, a wireless fidelity (WiFi) connection, and the like, and the embodiments of the present disclosure are not limited in this aspect. In some embodiments of the present disclosure, the server 130 and the terminal device 110 may implement signaling interactions by using the communication connection between the server 130 and the terminal device 110.

It should be understood that the structures and functions of the various elements in the environment 100 are described for illustrative purposes only and do not imply any limitation to the scope of the present disclosure.

Various example implementations of the present disclosure will be described in detail below.

### Example Interaction

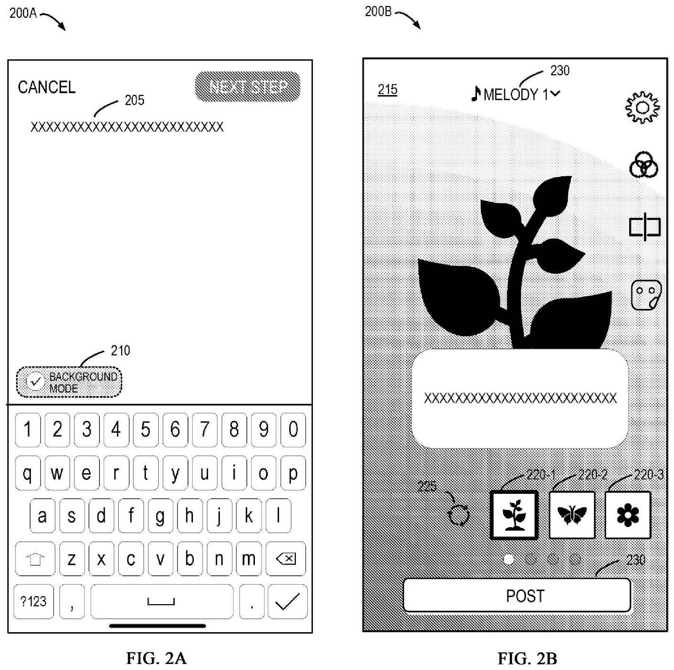

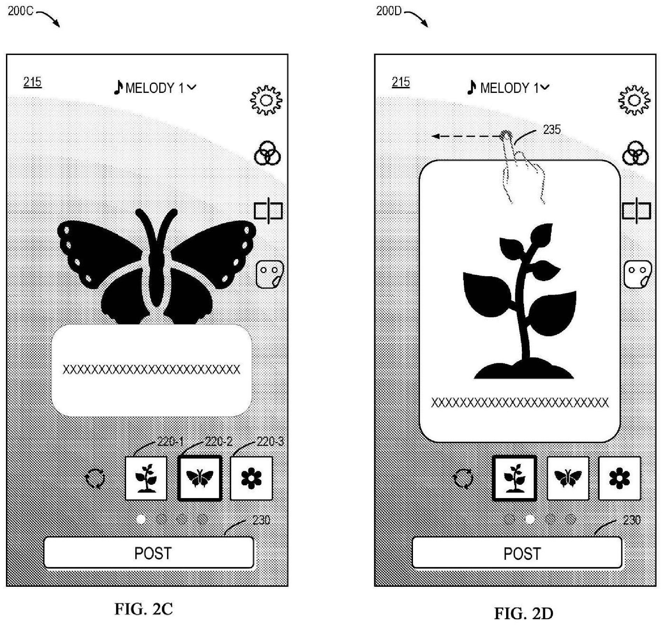

Some example interaction processes according to some embodiments of the present disclosure will be described below with reference to FIGS. 2A to 2D. The interfaces 200A to 200D shown in FIGS. 2Ato 2D may be provided by the terminal device 110 shown in FIG. 1.

In some embodiments, the terminal device 110 may display an interface 200A as shown in FIG. 2A, for example, in a case in response to receiving a request for the user to create a text related work. The interface 200A may also be referred to as a text input interface, which may also correspond to, for example, a text mode for creating the text related work.

As shown in FIG. 2A, the terminal device 110 may obtain the text content 205 via an input control (for example, an input field) on the interface 200A. In some embodiments, the interface 200A may also include, for example, a control 210 for controlling whether to enable a "background mode".

If the "background mode" is not enabled, the terminal device 110 may for example create or display a traditional text work based on the text content 205.

In some embodiments, the control 210 is selected by the user, for example, to indicate entering the "background mode". Accordingly, upon receiving a selection of a "Next step" button in interface 200A, for example, terminal device 110 may display interface 200B as shown in FIG. 2B. The interface 200B may also be referred to as the editing interface.

As shown in FIG. 2B, the terminal device 110 may display at least one piece of media content generated based on the text content 205 on the interface 200B. The at least one media content may include, for example, image content 220-1, 220-2, and 220-3 (individually or collectively referred to as image content 220) as shown in FIG. 2B. In some embodiments, such image content 220 may include static images, dynamic images, videos, and the like.

As shown in FIG. 2B, the interface 200B may include a preview region for displaying the preview content 215 of the image work. Such preview content 215 may indicate that text content 205 and image content 220-1 are combined according to a first style (e.g., a text box displaying superimposedly on a background image).

Taking FIG. 2B as an example, the terminal device 110 may, for example, provide multiple image contents 220 for the user to select. For example, if a selection for the image content 220-2 is received, the terminal device 110 may display the interface 200C as shown in FIG. 2C.

As shown in FIG. 2C, the terminal device 110 may update the preview content 215 of the image work to indicate that the text content 205 and the image content 220-2 are combined according to the first style. Thus, the user may edit the work more efficiently by selecting the image content.

In some embodiments, the terminal device 110 may further update the editing interface based on a preset operation, to display a group of new media content generated based on the target text content. Taking FIG. 2B as an example, the terminal device 110 for example may also provide a refresh entry 225. Accordingly, in response to receiving a selection of the refresh entry 225, the terminal device 110 may refresh the interface 200A, to display a group of new image content generated based on the text content 205. For example, the selection of the refresh entry 225 may be implemented by triggering the refresh entry 225 or sliding the refresh entry 225 to a fixed selected box (e.g., setting a selected box at a fixed location in the middle of the bottom of the screen).

Therefore, the terminal device 110 may provide richer candidate multimedia content to the user, thereby improving the efficiency of the user in work creation.

In some embodiments, while displaying a group of newly generated media content, the terminal device 110 may also display, for example, at least one piece of media content among the group of media content previously generated on the interface 200B (not shown in FIG. 2B). For example, the terminal device 110 may, for example, keep media content previewed by the user among the group of media content previously generated. Thus, the previously generated media content is co-displayed with the group of media content newly generated to facilitate the user to compare and select.

Alternatively or additionally, the terminal device 110 for example may also provide an identification control of previously generated media content. For example, if the selection of the identification control is received, the terminal device 110 may display a part or all of the group of media content previously generated to facilitate the comparison and selection by the user.

Therefore, the embodiments of the present disclosure can display the generated media content to the user, and prevent the user from missing the expected media content due to refreshing.

Although FIG. 2B illustrates that multiple multimedia content is provided (e.g., the image content 220-1 to the image content 220-3) as candidates in the interface 200B, the terminal device 110 may, for example, only present a single image content, e.g., the image content 220-1. The terminal device 110 for example may update the single image content presented in the interface based on a refresh request.

As another example, the terminal device 110 may also directly provide the preview content 215 corresponding to the generated media content. The preview content 215 may be used to directly display the combination of the generated media content and the text content 205. Accordingly, the refresh entry 225 may be used, for example, to directly update the media context generated based on the text content 205 in the preview content 215 and an identification of the at least one media context displayed on the interface 200B.

Based on such a manner, the embodiments of the present disclosure can efficiently provide the user with the media content matching the text content and can further improve freedoms of the users in creating.

In some embodiments, the terminal device 110 may also support, for example, the user modifying the combined style of the text content 205 and the generated media content.

Continuing with FIG. 2B as an example, FIG. 2B illustrates for example combining text content 205 and image content 220-1, e.g., in a first style (e.g., a text box displayed superimposedly on a background image).

Further, as shown in FIG. 2D, for example when a preset operation (for example, a sliding operation 235 in a predetermined direction) for the preview content 215 is received, the terminal device 110 may update the preview content 215 of the image work to indicate that the text content 205 and the image content 220-1 are combined in the second style (for example, an graphic-text box displayed superimposedly on the background).

In some embodiments, the first style or the second style may be selected or switched from a group of preset styles. Such preset styles may include, for example, a first preset style indicating that the text content is displayed superimposedly on the image content; a second preset style indicating that the text content and the image content are displayed side by side; and a third preset style indicating that the sticker corresponding to the target text content is displayed in association with the image content.

It should be understood that other suitable preset styles may also be designed according to actual needs to combine the text content and the corresponding media content.

In some embodiments, the terminal device 110 may, for example, provide a group of preset styles, and may switch the combined style of the text content 205 and the currently selected image content based on the sliding operation 235 shown in FIG. 2D.

In other embodiments, the terminal device 110 may provide input controls for inputting text content on the interfaces 200B to 200D as shown in FIGS. 2B to 2D. In some embodiments, the terminal device 110 may, for example, obtain the additional text content via the input control, and may accordingly update at least one piece of media content (for example, the image 220-1 to the image 220-3 shown in FIG. 2B) in the editing interface (the interfaces 200B to 200D) based on the obtained additional text content.

In some embodiments, the terminal device 110 may, for example, obtain updated media content generated based on the text content 205 and the additional text content. Further, the terminal device 110 may accordingly present the obtained updated media content in the editing interface. In this way, embodiments of the present disclosure may facilitate further optimizing or creating of media content.

In some embodiments, the terminal device 110 may, for example, also display the third media content based on at least one piece of media content generated based on the text content 205 in the editing interface (for example, the interface 200B to the interface 200D). Taking FIG. 2B as an example, the terminal device 110 may display the currently selected image 220-1 in the preview region.

Further, the terminal device 110 may, for example, obtain additional media content (also referred to as fourth media content) generated based on the obtained additional text content. As an example, such additional media content may be an additional image.

Correspondingly, the terminal device 110 may display superimposedly the third media content and the fourth media content on the editing interface. Continuing with FIG. 2B as an example, the terminal device 110 may, for example, display superimposedly the additional image generated based on the additional text content with the image 220-1 in the preview region to form the combined media content. For example, the image 220-1 and the additional image may respectively constitute a foreground part and a background part of the combined media content.

Therefore, the embodiments of the present disclosure can support the user to further optimize the media content, thereby helping the user to improve the quality of the work.

The editing process of the work is described above with reference to the image content as an example of the media content. In some embodiments, as shown in FIG. 2B, the media content generated based on the text content 205 may also include, for example an audio content 230.

Accordingly, the preview content 215 may, for example, provide a preview of a combination of the text content 205 and the audio content 230. For example, the terminal device 110 may further support the user in selecting other audio content by clicking the audio content 230 in a manner similar to the image content 220, or obtain a group of newly generated audio content and the like. It should be understood that the processes such as selecting, updating and style switching of the audio content may be implemented with reference to the process described for the image content 220, and details are not described herein again.

Further, after the editing of the work is completed, as shown in FIG. 2B to FIG. 2D, the terminal device 110 may display the target work, for example, the user may also trigger the post request of the target work by clicking the control 230. For example, the terminal device 110 may locally preview the target work regardless of whether such a target work is posted or is in the public visible state. Alternatively, the terminal device 110 may display the viewing page of the target work to play the target work.

Based on the above process, the embodiments of the present disclosure can provide the user with the media content corresponding to the text content, thereby helping the user to create text-related works with richer content.

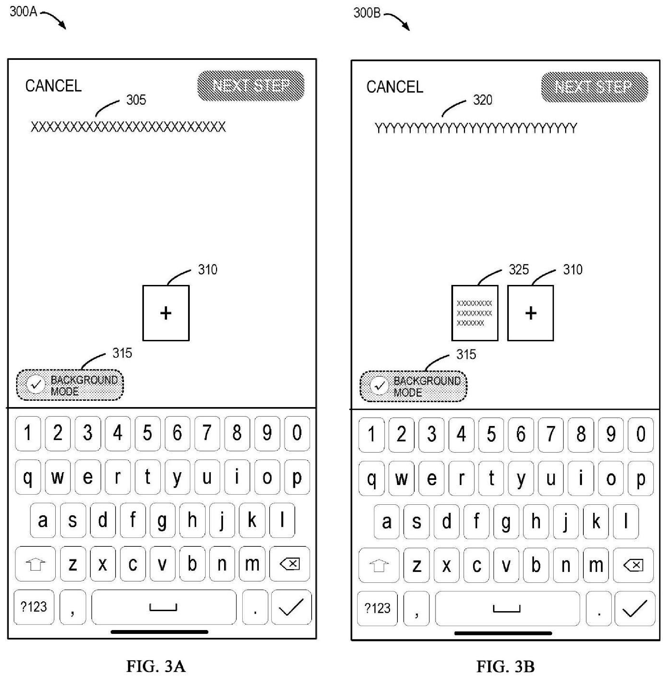

In some embodiments, the terminal device 110 may also support, for example, a work editing or creation based on multiple pieces of text content. An example interaction process according to some embodiments of the present disclosure will be described below with reference to FIGS. 3A to 3D. The interfaces 300A to 300D shown in FIGS. 3A to 3D may be provided by a terminal device 110 as shown in FIG. 1.

In some embodiments, the terminal device 110 may display an interface 300A as shown in FIG. 3A, for example, upon receiving a request for user to create text related works. The interface 300A may also be referred to as a first text input interface, which may also correspond to a text mode for creating a text related work, for example.

As shown in FIG. 3A, the terminal device 110 may obtain the text content 305 (also referred to as the first text content) through an input control (also referred to as a first input control, for example, an input field) in the interface 300A. In some embodiments, similar to FIG. 2A, the interface 300A may also include a control 315 for controlling whether to enable a "background mode", for example.

In some embodiments, the interface 300A may also include an addition entry 310 (also referred to as a first addition entry). Upon the selection for the addition entry 310, the terminal device 110 may, for example, present the interface 300B as shown in FIG. 3B. The interface 300B may be the same interface as the interface 300A, or may be a different second text input interface.

As shown in FIG. 3B, the terminal device 110 may obtain the text content 320 (also referred to as second text content) through an input control (also referred to as a second input control, for example, an input field) in the interface 300B.

In some embodiments, as shown in FIG. 3B, the terminal device 110 may also present a preview 325 of the first text content 305. The user may, for example, return to an interface (e.g., interface 300A) for editing the first text content 305 by clicking on the preview 325.

Similarly, the user may also add more text content by clicking the addition entry 310 for generating a work corresponding to the multiple pieces of text content.

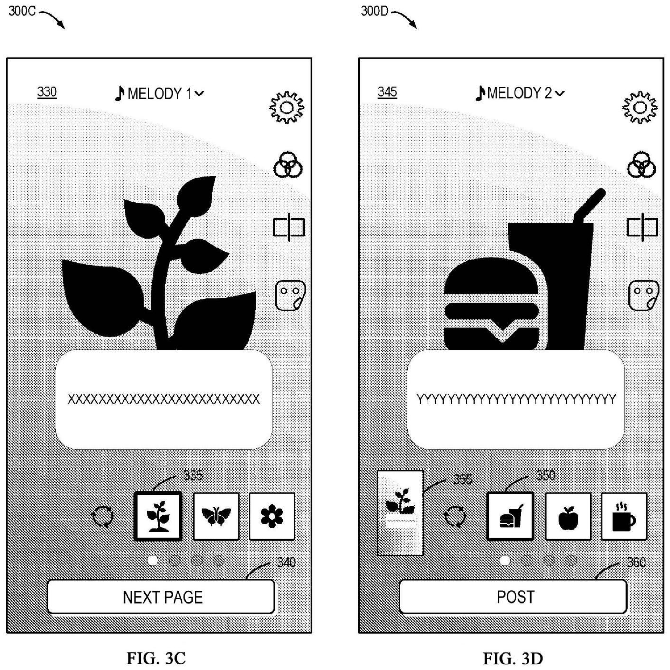

In some embodiments, the control 315 is selected by the user, for example, to indicate entering the "background mode". Accordingly, upon receiving a selection of a "Next" button in interface 300B, for example, terminal device 110 may display interface 300C as shown in FIG. 3C. The interface 300C may also be referred to as an editing interface.

As shown in FIG. 3C, the interface 300C may correspond to, for example, an editing interface of the first work part corresponding to the first text content 305. With reference to the content described above with respect to FIGS. 2B to 2D, such editing interface 300C may, for example, display preview content 330 of a first work part corresponding to first text content 305, which may correspond, for example, to a combination of first text content 305 and image content 335.

In some embodiments, in a case that the selection for the control 340 is received, the terminal device 110 may, for example, display the interface 300D shown in FIG. 3D. As shown in FIG. 3D, the interface 300D may correspond to, for example, an editing interface of the second work part corresponding to the second text content 320.

With reference to the content described above with respect to FIGS. 2B to 2D, such editing interface 300D may, for example, display preview content 345 of a second work part corresponding to second text content 320, which may correspond to, for example, a combination of second text content 320 and image content 350.

Additionally, the terminal device 110 may also present a preview 355 of the first work part in the interface 300D, for example, the user may return to an interface (for example, the interface 300C) for editing the first work part by clicking the preview 355.

Further, after completing multiple parts of a target work corresponding to multiple pieces of text content (for example, the first text content 305 and the second text content 320), the user may submit a post request of the target work, for example, by clicking the control 360, so that the terminal device 110 may display the target work. For example, the terminal device 110 may preview the target work locally regardless of whether such a target work is posted or is in the public visible state. Alternatively, the terminal device 110 may display the viewing page of the target work to play the target work.

Accordingly, such a target work may include a plurality of work parts corresponding to the plurality of text content. As an example, the target work is an image set including a plurality of images, the first work part may be a first image in the plurality of images, and the second work part may be a second image in the plurality of images.

In some embodiments, the terminal device 110 may also support using different types of media content to create different work parts. For example, the first work part corresponding to FIG. 3C may be generated based on the first media content of the first type, and the second work part corresponding to FIG. 3D may be generated based on the second media content of the second type, for example. In one example, the first media content of the first type may include, for example, image content, and the second media content of the second type may include audio content. Thus, embodiments of the present disclosure may further enrich the target work.

An example interaction process of first inputting multiple pieces of text content and then separately editing corresponding pieces of work parts is described above with reference to FIG. 3A to FIG. 3D. In some embodiments, the terminal device 110 may also support, for example, initiating a request to add an additional work part in an editing interface (for example, the interface 200B or the interface 300C) of the work.

For example, the terminal device 110 may display the second addition entry on an editing interface (for example, the interface 200B or the interface 300C). Upon receiving the selection of the second addition entry, the terminal device 110 may further obtain additional text content. For example, the terminal device 110 may present a text input interface similar to the text input interface shown in FIG. 2A to obtain the additional text content. Alternatively, the terminal device 110 may also provide an input control for obtaining additional text content in the editing interface.

Correspondingly, after obtaining the additional text content, the terminal device 110 may display an editing interface for editing the work part corresponding to the additional text content. Such an editing interface may be similar to interface 300D, which may provide at least one piece of media content generated based on additional text content to edit a piece of work part corresponding to the additional text content.

Based on the process described above, embodiments of the present disclosure can further support a user to create a target work including a plurality of work parts through a plurality of pieces of text content, so as to effectively support a user in creating works with richer context and forms.

### Example Processes

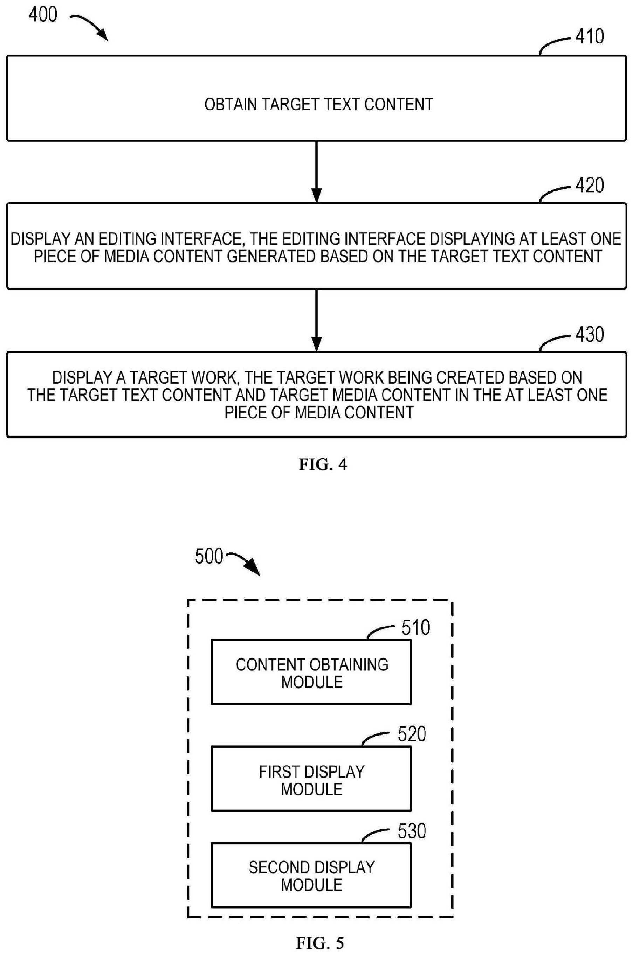

FIG. 4 illustrates a flowchart of an example process 400 of displaying a work in accordance with some embodiments of the present disclosure. Process 400 may be implemented at terminal device 110. The process 400 is described below with reference to FIG. 1.

As shown in FIG. 4, in block 410, the terminal device 110 obtains target text content.

In block 420, the terminal device 110 displays an editing interface, and the editing interface displays at least one piece of media content generated based on the target text content.

At block 440, the terminal device 110 displays a target work created based on the target text content and the target media content in the at least one piece of media content.

In some embodiments, the at least one piece of media content includes at least one piece of image content generated based on the target text content.

In some embodiments, the editing interface includes a preview region for displaying preview content of an image work, and the preview content indicates that the target text content and the first image content among the at least one piece of image content are combined according to a first style.

In some embodiments, the process 400 further includes: updating the preview content of the image work based on a first preset operation on the preview content, to indicate that the target text content and the first image content are combined according to a second style.

In some embodiments, the process 400 further includes: updating the preview content of the image work based on a selection of the second image content among the at least one piece of image content, to indicate that the target text content and the second image content are combined according to the first style.

In some embodiments, the first style indicates one of: displaying superimposedly the target text content on the first image content; displaying the target text content and the first image content in parallel; and displaying a sticker corresponding to the target text content in association with the first image content.

In some embodiments, the at least one piece of media content is the first group of media content, and the process 400 further includes: in response to receiving a second preset operation, updating the editing interface to display a second group of media content generated based on the target text content.

In some embodiments, the process 400 further includes: displaying at least one of the first group of media content and/or an identification control of the first group of media content on the editing interface while displaying the second group of media content.

In some embodiments, the target work includes at least a first work part and a second work part, the first work part corresponds to the first text content, and the second work part corresponds to the second text content.

In some embodiments, the target work is an image collection including a plurality of images, the first work part is a first image in the plurality of images, and the second work part is a second image in the plurality of images.

In some embodiments, obtaining the text content includes: displaying a first input control in a first text input interface; obtaining the first text content via the first input control; displaying a second input control based on a preset operation on a first addition entry on the first text input interface; and obtaining the second text content via the second input control, the second input control being displayed on the first text input interface or the second text input interface.

In some embodiments, the editing interface is configured to: display at the same time media content generated based on the first text content and the media content generated based on the second text content; or switch, based on a third preset operation, the editing interface from displaying media content generated based on the first text content to displaying the media content generated based on the second text content.

In some embodiments, the target text content is the first text content, the editing interface is a first editing interface, the first editing interface includes a second adding entry, and the process 400 further includes: receiving a selection of a second addition entry in the first editing interface; obtaining second text content; and displaying a second editing interface, the second editing interface displaying at least one piece of media content generated based on the second text content.

In some embodiments, the first work part corresponds to first media content generated based on the first text content, the second work part corresponds to the second media content generated based on the second text content, and the type of the first media content is different from the second media content.

In some embodiments, the first media content includes image content and the second media content includes audio content.

In some embodiments, the process 400 further includes: obtaining third text content; and updating the at least one piece of media content in the editing interface based on the third text content.

In some embodiments, updating the at least one piece of media content in the editing interface includes displaying updated media content generated based on the target text content and the third text content in the editing interface.

In some embodiments, updating the at least one piece of media content in the editing interface includes: displaying, in the editing interface, third media content among the at least one piece of media content; obtaining fourth media content generated based on the third text content; and displaying superimposedly the third media content and the fourth media content in the editing interface.

In some embodiments, the at least one piece of media content includes at least one piece of audio content generated based on the target textual content.

### Example Apparatus and Device

Embodiments of the present disclosure also provide a corresponding apparatus for implementing the above method or process. FIG. 5 shows a schematic structural block diagram of an apparatus 500 for displaying a work according to some embodiments of the present disclosure. The apparatus 500 may be implemented or included in the terminal device 110. The various modules/components in the apparatus 500 may be implemented by hardware, software, firmware, or any combination thereof.

As shown in FIG. 5, the apparatus 500 includes a content obtaining module 510 configured to obtain target text content; a first display module 520 configured to display an editing interface, the editing interface displaying at least one piece of media content generated based on the target text content; and a second display module 530 configured to display the target work, the target work being created based on the target text content and the target media content in the at least one piece of media content.

In some embodiments, the at least one piece of media content includes at least one piece of image content generated based on the target text content.

In some embodiments, the editing interface includes a preview region for displaying preview content of an image work, and the preview content indicates that the target text content and the first image content among the at least one piece of image content are combined according to a first style.

In some embodiments, the apparatus 500 further includes: a first updating module configured to update the preview content of the image work based on a first preset operation on the preview content to indicate that the target text content and the first image content are combined according to a second style.

In some embodiments, the apparatus 500 further includes a second updating module configured to update the preview content of the image work based on a selection of the second image content among the at least one image content to indicate that the target text content and the second image content are combined according to the first style.

In some embodiments, the first style indicates one of: displaying superimposedly the target text content on the first image content; displaying the target text content and the first image content in parallel; and displaying a sticker corresponding to the target text content in association with the first image content.

In some embodiments, the at least one piece of media content is the first group of media content, and the apparatus 500 further includes a third display module configured to, in response to receiving a second preset operation, update the editing interface to display a second group of media content generated based on the target text content.

In some embodiments, the apparatus 500 further includes a fourth display module configured to display at least one of the first group of media content and/or an identifier control of the first group of media content on the editing interface while displaying the second group of media content.

In some embodiments, the target work includes at least a first work part and a second work part, the first work part corresponds to the first text content, and the second work part corresponds to the second text content.

In some embodiments, the target work is an image collection including a plurality of images, the first work part is a first image in the plurality of images, and the second work part is a second image in the plurality of images.

In some embodiments, the obtaining module 510 is further configured to: display a first input control in a first text input interface; obtain the first text content via the first input control; display a second input control based on a preset operation on a first addition entry on the first text input interface; and obtain the second text content via the second input control, the second input control being displayed on the first text input interface or the second text input interface.

In some embodiments, the editing interface is configured to: display at the same time the media content generated based on the first text content and the media content generated based on the second text content; or switch, based on a third preset operation, the editing interface from displaying the media content generated based on the first text content to displaying the media content generated based on the second text content.

In some embodiments, the target text content is the first text content, the editing interface is a first editing interface, the first editing interface includes a second adding entry, and the apparatus 500 further includes a fifth displaying module configured to: receive a selection of a second addition entry in the first editing interface; obtain second text content; and display a second editing interface, the second editing interface displaying at least one piece of media content generated based on the second text content.

In some embodiments, the first work part corresponds to the first media content generated based on the first text content, the second work part corresponds to the second media content generated based on the second text content, and the type of the first media content is different from the second media content.

In some embodiments, the first media content includes image content and the second media content includes audio content.

In some embodiments, the apparatus 500 further includes a third updating module configured to: obtain third text content; and update the at least one piece of media content in the editing interface based on the third text content.

In some embodiments, the third updating module is further configured to display updated media content generated based on the target text content and the third text content in the editing interface.

In some embodiments, the third updating module is further configured to: display third media content among the at least one piece of media content in the editing interface; obtain fourth media content generated based on the third text content; and display superimposedly the third media content and the fourth media content in the editing interface.

In some embodiments, the at least one piece of media content includes at least one piece of audio content generated based on the target text content.

The units included in the apparatus 500 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the elements in the apparatus 500 may be implemented, at least in part, by one or more hardware logic components. By way of example and not limitation, various types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

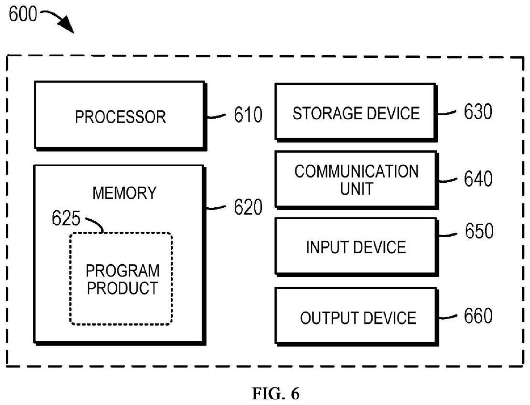

FIG. 6 illustrates a block diagram of an electronic device 600 in which one or more embodiments of the present disclosure may be implemented. It should be understood that the electronic device 600 illustrated in FIG. 6 is merely illustrative and should not constitute any limitation on the functionality and scope of the embodiments described herein. The electronic device 600 shown in FIG. 6 may be configured to implement the electronic device 110 in FIG. 1.

As shown in FIG. 6, the electronic device 600 is in the form of a general-purpose electronic device. Components of the electronic device 600 may include, but are not limited to, one or more processors or processing units 610, a memory 620, a storage device 630, one or more communication units 640, one or more input devices 650, and one or more output devices 660. The processing unit 610 may be a physical or virtual processor and capable of performing various processes according to programs stored in the memory 620. In multiprocessor systems, multiple processing units execute computer-executable instructions in parallel to improve parallel processing capabilities of electronic device 600.

Electronic device 600 typically includes a plurality of computer storage media. Such media may be any available media accessible to the electronic device 600, including, but not limited to, volatile and non-volatile media, removable and non-removable media. The memory 620 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 630 may be a removable or non-removable medium and may include a machine-readable medium, such as a flash drive, magnetic disk, or any other medium, which may be capable of storing information and/or data and may be accessed within electronic device 600.

The electronic device 600 may further include additional removable/non-removable, volatile/non-volatile storage media. Although not shown in FIG. 6, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 620 may include a computer program product 625 having one or more program modules configured to perform various methods or actions of various embodiments of the present disclosure.

The communication unit 640 is configured to communicate with another electronic device through a communication medium. Additionally, the functionality of components of the electronic device 600 may be implemented in a single computing cluster or multiple computing machines capable of communicating over a communication connection. Thus, the electronic device 600 may operate in a networked environment using logical connections with one or more other servers, network personal computers (PCs), or another network node.

The input device 650 may be one or more input devices, such as a mouse, a keyboard, a trackball, or the like. The output device 660 may be one or more output devices, such as a display, a speaker, a printer, or the like. The electronic device 600 may also communicate with one or more external devices (not shown) through the communication unit 640 as needed, external devices such as storage devices, display devices, etc. , communicate with one or more devices that enable a user to interact with the electronic device 600, or communicate with any device (e.g., a network card, a modem, etc. ) that enables the electronic device 600 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or part of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for work displaying, comprising:
obtaining target text content;
displaying an editing interface, the editing interface displaying at least one piece of media content generated based on the target text content; and
displaying a target work, the target work being created based on the target text content and target media content in the at least one piece of media content.

2. The method of claim 1, wherein the at least one piece of media content comprises at least one piece of image content generated based on the target text content.

3. The method of claim 2, wherein the editing interface comprises a preview region for displaying preview content of a image work, the preview content indicating that the target text content and first image content among the at least one piece of image content are combined according to a first style.

4. The method of claim 3, further comprising:
updating the preview content of the image work based on a first preset operation on the preview content, to indicate that the target text content and the first image content are combined according to a second style.

5. The method of claim 3, further comprising:
updating the preview content of the image work based on a selection of second image content among the at least one piece of image content, to indicate that the target text content and the second image content are combined according to the first style.

6. The method of claim 3, wherein the first style indicates one of the following:
displaying superimposedly the target text content on the first image content;
displaying the target text content and the first image content in parallel;
displaying a sticker corresponding to the target text content, in association with the first image content.

7. The method of claim 1, wherein the at least one piece of media content is a first group of media content, and the method further comprises:
in response to receiving a second preset operation, updating the editing interface to display a second group of media content generated based on the target text content.

8. The method of claim 7, further comprising:
displaying at least one of the first group of media content and/or an identification control of the first group of media content on the editing interface while displaying the second group of media content.

9. The method of claim 1, wherein the target work includes at least a first work part and a second work part, the first work part corresponding to first text content and the second work part corresponding to second text content.

10. The method of claim 9, wherein the target work is an image collection including a plurality of images, and the first work part is a first image of the plurality of images and the second work part is a second image of the plurality of images.

11. The method of claim 9, wherein obtaining text content comprises:
displaying a first input control in a first text input interface;
obtaining the first text content via the first input control;
displaying a second input control based on a preset operation on a first addition entry on the first text input interface; and
obtaining the second text content via the second input control, the second input control being displayed on the first text input interface or a second text input interface.

12. The method of claim 11, wherein the editing interface is configured to:
display at the same time media content generated based on the first text content and media content generated based on the second text content; or
switch, based on a third preset operation, the editing interface from displaying media content generated based on the first text content to displaying media content generated based on the second text content.

13. The method of claim 9, wherein the target text content is the first text content, the editing interface is a first editing interface, the first editing interface comprises a second addition entry, and the method further comprises:
receiving a selection of the second addition entry in the first editing interface;
obtaining the second text content; and
displaying a second editing interface, the second editing interface displaying at least one piece of media content generated based on the second text content.

14. The method of claim 9, wherein the first work part corresponds to first media content generated based on the first text content, the second work part corresponds to second media content generated based on the second text content, and a type of the first media content is different from the second media content.

15. The method of claim 14, wherein the first media content comprises image content and the second media content comprises audio content.

16. The method of claim 1, further comprising:
obtaining third text content; and
updating the at least one piece of media content in the editing interface, based on the third text content.

17. The method of claim 16, wherein updating the at least one piece of media content in the editing interface comprises:
displaying updated media content generated based on the target text content and the third text content in the editing interface.

18. The method of claim 16, wherein updating the at least one piece of media content in the editing interface comprises:
displaying third media content among the at least one piece of media content in the editing interface;
obtaining fourth media content generated based on the third text content; and
displaying superimposedly the third media content and the fourth media content in the editing interface.

19. The method of claim 1, wherein the at least one media content comprises at least one audio content generated based on the target text content.

20. An apparatus for work displaying, comprising:
a content obtaining module configured to obtain target text content;
a first display module configured to display an editing interface, the editing interface displaying at least one piece of media content generated based on the target text content; and
a second display module configured to display a target work, the target work being created based on the target text content and target media content in the at least one piece of media content.

21. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 19.

22. A computer-readable storage medium having stored thereon a computer program executable by a processor to implement the method of any of claims 1 to 19.
